# EUROPEAN PATENT APPLICATION

(11) **EP 3 930 386 A1**
(43) Date of publication of application: **29.12.2021**
(21) Application number: 19916126.6
(22) Date of filing: 22.02.2019
(51) Int. Cl.: H04W 52/14, H04W 28/06

(54) **TERMINAL AND WIRELESS COMMUNICATION METHOD**

(71) Applicant: NTT DOCOMO, INC., Chiyoda-Ku Tokyo 100-6150 (JP)
(72) Inventor: OGUMA, Yuta, Tokyo 100-6150 (JP); UMEDA, Hiromasa, Tokyo 100-6150 (JP)
(74) Representative: Hoffmann Eitle
(86) International application number: PCT/JP2019/006908
(87) International publication number: WO 2020/170452

(57) **Abstract**

A terminal according to the invention is provided with: a control unit that determines a transmission power of an uplink signal on the basis of the association between a first parameter indicating a transmission rate of the uplink signal during a predetermined time period and a second parameter related to the uplink transmission power; and a transmission unit that transmits the uplink signal by use of the transmission power.

## Description

### Technical Field

The present disclosure relates to a terminal and a radio communication method.

### Background Art

Long Term Evolution (LTE) has been specified for achieving a higher data rate, lower latency, and the like in a Universal Mobile Telecommunication System (UMTS) network. Future systems of LTE have also been studied for achieving a broader bandwidth and a higher speed based on LTE. Examples of the future systems of LTE include systems called LTE-Advanced (LTE-A), Future Radio Access (FRA), 5th generation mobile communication system (5G), 5G plus (5G+), Radio Access Technology (New-RAT), New Radio (NR), and the like.

### Citation List

### Non-Patent Literature

NPL 1 3GPP TS 38.101-2 v15.4.0, "NR; User Equipment (UE) radio transmission and reception; Part 2: Range 2 Standalone (Release 15)," December 2018

### Summary of Invention

### Technical Problem

In a radio communication system, a radio communication apparatus (e.g., a terminal) performs transmit power control. However, there is room for further study on configuration of transmit power for the radio communication apparatus in a specific frequency band.

An objective of the present disclosure is to enable appropriate configuration of the transmit power for the radio communication apparatus in a specific frequency band.

### Solution to Problem

A terminal according to an aspect of the present disclosure includes: a control section that determines transmit power of an uplink signal based on association between a first parameter indicating a transmission ratio of the uplink signal in a predetermined period and a second parameter relevant to uplink transmit power; and a transmission section that transmits the uplink signal using the transmit power.

### Advantageous Effects of Invention

According to the present disclosure, appropriate configuration of transmit power for a radio communication apparatus in a specific frequency band is enabled.

### Brief Description of Drawings

FIG. 1 illustrates exemplary Power Classes and transmit power;
FIG. 2 is a block diagram illustrating an exemplary configuration of a base station;
FIG. 3 is a block diagram illustrating an exemplary configuration of a terminal;
FIG. 4 is a sequence diagram illustrating an exemplary operation based on control method 1;
FIG. 5 illustrates an exemplary association between UL duty cycles and Power Management UE Maximum Power Reduction (P-MPR) according to control method 1;
FIG. 6 illustrates an example of a scheduling process for the terminal according to control method 1;
FIG. 7 illustrates an example of information used in the scheduling process for the terminal according to control method 1;
FIG. 8 is a sequence diagram illustrating an exemplary operation based on control method 2;
FIG. 9 illustrates an exemplary association between Pmax and the UL duty cycles according to control method 2; and
FIG. 10 illustrates an exemplary hardware configuration of the base station and the terminal.

### Description of Embodiments

Hereinafter, an embodiment according to one aspect of the present disclosure will be described with reference to the accompanying drawings.

In NR, a broader band of frequencies including frequencies of an existing LTE frequency band and being broader than the LTE frequency band (for example, also referred to as "LTE band") is utilized. For example, in NR, the frequency band is divided into two categories of frequency bands, called Frequency Range 1 (FR1) and Frequency Range 2 (FR2). FR1 denotes a frequency band of 6 GHz or less. FR1 is also referred to as Sub 6. FR2 denotes a higher frequency band than the frequency band of FR1, and includes a millimeter wave band, for example.

In radio communications using FR1 and FR2, transmit power control is specified.

For example, the transmit power control includes a control of lowering the transmit power of an uplink (UL) signal (hereinafter referred to as "UL transmit power") in order to satisfy a radio wave protection guideline that defines a guideline value and the like considering effects of radio waves (e.g., FR2 millimeter-wave and the like) on a human body.

When a terminal performs the control of lowering the UL transmit power, information on the transmit power configured for the terminal (also referred to as a parameter relevant to the UL transmit power) includes, for example, P-MPR that is an example of a back-off value with respect to the maximum transmit power of the terminal. For example, the control of lowering the UL transmit power using P-MPR may be a control of lowering the Total Radiated Power (TRP) or the Equivalent Isotropic Radiated Power (EIRP) of the terminal.

For example, in FR1 and FR2, the upper limit value of P-MPR is not specified, and the terminal can configure P-MPR to any value. The configuration of P-MPR allows UL transmission that satisfies the radio wave protection guideline.

Further, when the terminal performs the control of lowering the UL transmit power, the information on the transmit power configured for the terminal includes, for example, a UL duty cycle that is an example of information (also referred to as a parameter) indicating a transmission ratio of the UL signal in a predetermined period (e.g., 10 ms) (e.g., ratio between downlink (DL) and UL). For example, when UL duty cycle = 100%, the specified period is entirely allocated for UL transmissions, and when UL duty cycle = 50%, half of the specified period is allocated for UL transmissions. Note that the terminal or a base station may determine the transmission ratio of the UL signal within a range equal to or smaller than a value indicated by the UL duty cycle.

By way of example, a method in which the terminal employing a Time Division Duplex (TDD) system controls the transmit power using the UL duty cycle in the radio communication using FR1 will be described. In this method, the radio wave protection guideline can be satisfied by reference transmit power (e.g., Power Class 3 (PC3): 23 dBm).

For example, when transmitting a UL signal using a transmit power (e.g., Power Class 2 (PC2): 26 dBm) higher than the reference transmit power, the terminal notifies the base station (in other words, a network side) of a UL duty cycle at which the radio wave protection guideline can be satisfied with the higher transmit power. On the other hand, the terminal is notified of, for example, the allocation of UL transmission (e.g., UL grant) by the base station. In other words, the base station sets (e.g., configures) the transmission ratio (e.g., a ratio between UL and DL) of the UL signal to the terminal. When the transmission ratio of the UL signal configured by the base station is higher than the UL duty cycle of which the terminal notified the base station, the terminal changes (in other words, falls back) from PC2 to PC3 to lower the UL transmit power.

Also in FR2, it is considered that the terminal controls the transmit power in the same manner as in FR1. However, there is room for study on a method for controlling the transmit power using the UL duty cycle in the radio communication using FR2 (e.g., millimeter-wave communication).

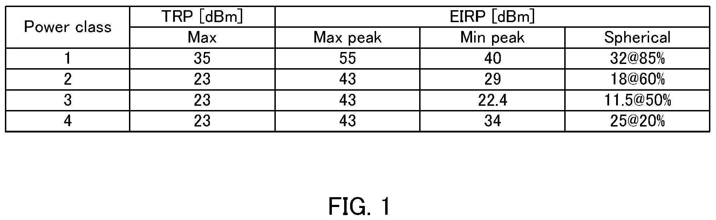

Here, FIG. 1 illustrates an example of Power Classes (e.g., PC1, PC2, PC3, and PC4) used in the radio communication using FR2 and transmit powers (e.g., TRP and EIRP) specified for each of the Power Classes.

For example, in FR2, it is difficult to uniformly specify the reference transmit power such as that in FR1 (e.g., 23 dBm of PC3 in FR1) due to a difference in radio wave propagation property. For this reason, it is probable that appropriate control is not performed even when the transmit power control based on the Power Classes such as those in FR1 is introduced into FR2. For example, comparison between PC2 and PC3 illustrated in FIG. 1 shows that the maximum TRP and the maximum peak of EIRP have the same values between PC2 and PC3. In other words, the Power Classes in FR2 are not in such a relationship as the relationship between PC2 (e.g., 26 dBm) and PC3 (e.g., 23 dBm) in FR1 which allows fallback.

Further, a greater power back-off value (e.g., P-MPR) may be configured for terminals configured with higher UL transmit power.

However, the difference between the lower limit value and the upper limit value of the transmit power (e.g., EIRP) of each Power Class (in other words, the configuration width of the transmit power) is greater in FR2 than in FR1. For example, in PC3 illustrated in FIG. 1, the lower limit value (Min peak) of EIRP is configured to 22.4 dBm, and the upper limit value (Max peak) of EIRP is configured to 43 dBm. For example, a terminal configured with PC3 determines the UL transmit power in the range of EIRP from 22.4 dBm to 43 dBm.

In such a Power Class in which the configuration width of the transmit power is larger than the configuration width of FR1, an appropriate P-MPR value may differ depending on the transmit power within the range specified for the Power Class. Thus, for example, when P-MPR is specified based on the Power Classes, P-MPR may not be appropriate depending on the UL transmit power configured for each terminal even when the terminals are configured with the same Power Class.

For example, the appropriate P-MPR value for 43 dBm that is the upper limit value of the transmit power specified for PC3 illustrated in FIG. 1 can be an excessive back-off value with respect to 22.4 dBm that is the lower limit value of the transmit power specified for the same PC3. Likewise the appropriate P-MPR value for 22.4 dBm that is the lower limit value of the transmit power specified for PC3 illustrated in FIG. 1 can be an insufficient back-off value with respect to 43 dBm that is the upper limit value of the transmit power specified for the same PC3.

As is understood, when the transmit power is controlled in FR2 based on the Power Classes such as those in FR1, an excessive or insufficient decrease in the UL transmit power may be caused, leading to a case where the radio wave protection guideline is not satisfied, or a case where the UL transmit power is excessively lowered.

Moreover, as described above, the upper limit values of P-MPR to be configured for the terminal are not specified in FR1 and FR2. Further, as described above, the configuration width of the transmit power specified for each Power Class of FR2 is larger than that in FR1. Accordingly, in the radio communication using FR2, there is a possibility that a sudden power drop occurs instantaneously depending on the configuration of P-MPR.

Since the terminal is capable of configuring any P-MPR, the base station cannot know P-MPR configured by the terminal. Thus, the base station is incapable of determining whether the sudden decrease in the received power of a signal transmitted by the terminal is caused by the configuration of P-MPR, or by other factors (e.g., blockage by a human body or the like). Therefore, when the terminal controls the UL transmit power using P-MPR, the base station may not be capable of, for example, normally controlling processes relevant to the UL communication (e.g., scheduling and the like).

The present embodiment will be described in relation to a technique in which a radio communication apparatus (e.g., a terminal) performs appropriate UL transmit power control in FR2.

### [Configurations of Base Station and Terminal]

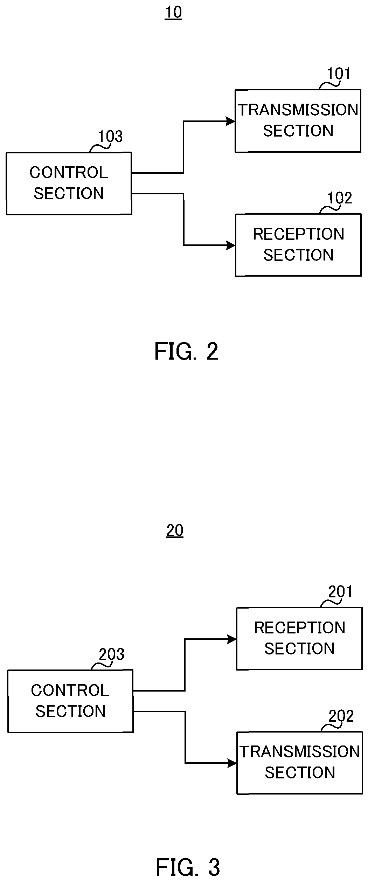

FIG. 2 is a block diagram illustrating an example of the configuration of base station 10 according to the present embodiment. Base station 10 includes, for example, transmission section 101, reception section 102, and control section 103.

Transmission section 101 transmits a DL signal for terminal 20 to terminal 20. For example, transmission section 101 transmits the DL signal under the control of control section 103.

The DL signal transmitted by base station 10 may include, for example, information on the transmit power in UL (e.g., a parameter relevant to the UL transmit power). In addition, the DL signal transmitted by base station 10 may include, for example, information indicating allocation of the UL signal (e.g., UL grant).

Reception section 102 receives a UL signal transmitted from terminal 20. For example, reception section 102 receives the UL signal under the control of control section 103.

The UL signal transmitted by terminal 20 may include, for example, information on the transmit power in UL (e.g., transmit power parameter). The information on the transmit power in UL may include, for example, information indicating the transmission ratio of the UL signal in a predetermined period (e.g., UL duty cycle). Further, the UL signal transmitted by terminal 20 may include UL data (e.g., a signal of Physical Uplink Shared Channel (PDSCH)).

Control section 103 controls transmission processing of transmission section 101 and reception processing of reception section 102. For example, control section 103 receives control information and the like from a higher layer (not illustrated), and outputs the control information and the like to transmission section 101. Control section 103 also outputs data, control information, and the like received from reception section 102 to the higher layer.

For example, control section 103 may determine the allocation of the UL signal for terminal 20, and may output information (e.g., UL grant) indicating the determined allocation to transmission section 101.

FIG. 3 is a block diagram illustrating an example of the configuration of terminal 20 according to the present embodiment. Terminal 20 includes reception section 201, transmission section 202, and control section 203, for example.

Reception section 201 receives a DL signal transmitted from base station 10. For example, reception section 201 receives the DL signal under the control of control section 203.

Transmission section 202 transmits a UL signal to base station 10. For example, transmission section 202 transmits the UL signal under the control of control section 203.

Control section 203 controls a communication operation including reception processing of reception section 201 and transmission processing of transmission section 202.

For example, control section 203 determines the transmit power of the UL signal. For example, control section 203 determines the information on the transmit power of the UL signal (e.g., UL duty cycle, or power back-off value (e.g., P-MPR)). Control section 203 determines the transmit power of the UL signal based on the determined information.

### [Exemplary Operation of Base Station and Terminal]

Hereinafter, three control methods for controlling the operations of base station 10 and terminal 20 will be illustrated. Note that the control methods in the present disclosure are not limited to these three methods.

### [Control Method 1]

In control method 1, terminal 20 determines the UL transmit power based on the association between the transmission ratio of the UL signal (e.g., UL duty cycle) and the power back-off value (e.g., P-MPR) for the UL transmit power (e.g., the maximum transmit power).

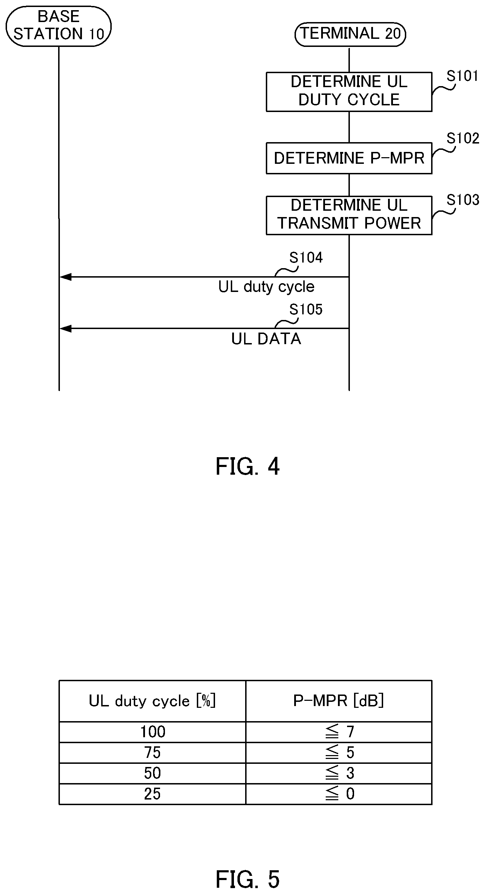

FIG. 4 is a sequence diagram illustrating an example of operations of base station 10 and terminal 20 based on control method 1 according to the present embodiment.

Terminal 20 determines the UL duty cycle (S101). For example, terminal 20 may determine a UL duty cycle corresponding to the transmit power specified for the configured Power Class. For example, by determining this UL duty cycle, terminal 20 can satisfy the radio wave protection guideline.

Terminal 20 determines P-MPR associated with the determined UL duty cycle based on the association between UL duty cycles and P-MPR (S102).

FIG. 5 illustrates an exemplary association between the UL duty cycles and P-MPR. In FIG. 5, P-MPR (in other words, the upper limit values of P-MPR of, e.g., 7 dBm, 5 dBm, 3 dBm, and 0 dBm) is associated one-to-one with the UL duty cycles (e.g., 100%, 75%, 50%, and 25%).

The association illustrated in FIG. 5 is shared, for example, between base station 10 and terminal 20. The association illustrated in FIG. 5 may be notified (or configured) from base station 10 to terminal 20, for example, or may be specified in the specifications in advance.

Further, the association between the UL duty cycles and P-MPR is not limited to the example illustrated in FIG. 5. For example, the values of UL duty cycle and P-MPR are not limited to the values illustrated in FIG. 5. In addition, the number of candidates for UL duty cycle and P-MPR is not limited to the example illustrated in FIG. 5 (e.g., four candidates).

Here, as described above, the higher the UL transmit power of terminal 20, the greater the P-MPR becomes. In addition, the greater the value of UL duty cycle, the higher the UL transmit power, because the transmission ratio of the UL signal becomes higher. Therefore, in the association between the UL duty cycles and P-MPR illustrated in FIG. 5, the greater the value of UL duty cycle, the greater the P-MPR.

For example, in FIG. 5, when the UL duty cycle is 100%, terminal 20 determines a P-MPR of 7 dB or less. Further, in FIG. 5, for example, when the UL duty cycle is 25%, terminal 20 determines a P-MPR of 0 dB or less.

In FIG. 4, terminal 20 determines the UL transmit power of the UL signal (e.g., UL data) using the determined P-MPR (S103).

Terminal 20 notifies base station 10 of the determined UL duty cycle (S104). For example, Uplink Control Information (UCI) or an uplink control channels (e.g., Physical Uplink Control Channel (PUCCH)) may be used for the notification of the information indicating the UL duty cycle. In addition, the timing of notification of the UL duty cycle is not limited to the example illustrated in FIG. 4. The timing of notification of the UL duty cycle may be configured, for example, to any timing between S101 and S105 illustrated in FIG. 4.

Terminal 20 transmits the UL data to base station 10 using, for example, the determined UL transmit power (S105). Note that, terminal 20 may, for example, allocate the UL data to UL resources in accordance with UL allocation information (e.g., UL grant) indicated from base station 10 (not illustrated). In addition, terminal 20 may select, based on the UL duty cycle, resources to be used for transmitting the UL signal from among the UL resources indicated in the UL grant, for example. In other words, based on the UL duty cycle, terminal 20 may not use a part of the UL resources indicated in the UL grant.

Base station 10 receives the UL signal (e.g., information indicating the UL duty cycle or UL data) transmitted from terminal 20.

After receiving the UL signal, base station 10 may identify, based on the association between the UL duty cycles and P-MPR illustrated in FIG. 5, P-MPR corresponding to the UL duty cycle included in the UL signal. Base station 10 may determine scheduling for terminal 20, for example, using the identified P-MPR.

Hereinafter, an exemplary scheduling in base station 10 for terminal 20 using P-MPR will be described.

By way of example, a description will be given of a method for selecting (in other words, choosing) a base station to which terminal 20 is connected (hereinafter, referred to as a connection target base station) when there are base station A (e.g., base station 10) and base station B (e.g., base station 10) in the vicinity of terminal 20.

Terminal 20 is connected to base station A at present. In addition, base station B is assumed to be located farther from terminal 20 than base station A. Accordingly, terminal 20 assumes that the communication quality between base station B and terminal 20 is lower than the communication quality between base station A and terminal 20.

Hereinafter, three Cases 1, 2, and 3 will be described which are different from one another in the presence or absence of blockage by a human body (e.g., a user of terminal 20) and in the presence or absence of a decrease in the UL transmit power due to P-MPR in communication between terminal 20 and base station A. For example, based on the UL duty cycle included in the UL signal transmitted from terminal 20, base station A identifies P-MPR (upper limit value) configured for terminal 20.

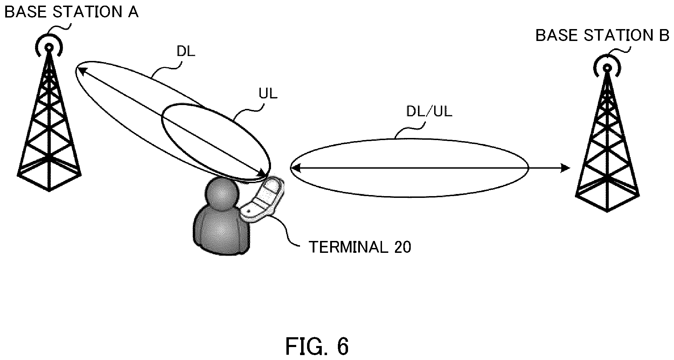

FIG. 6 illustrates an example of the states of DL and UL beams (or the magnitudes of the transmit power) in Case 3 described later.

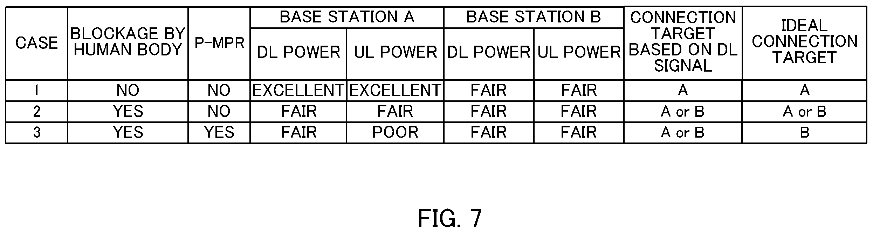

FIG. 7 illustrates an example of information used for a scheduling process for terminal 20 (e.g., selection of the connection target base station) in Cases 1, 2, and 3.

For example, FIG. 7 illustrates examples of DL power and UL power of base station A (e.g., the transmit power and the received power at base station A), and the DL power and the UL power of base station B. In addition, FIG.7 illustrates examples of the connection target base station for terminal 20 that may be determined based on the DL signal (such a connection target base station is referred to as "connection target based on the DL signal"), and of an ideal connection target base station for terminal 20 (referred to as "ideal connection target") in Cases 1, 2, and 3.

In addition, here, a situation in which the communication between terminal 20 and base station A becomes impossible due to the blockage by the human body is not considered.

### <Case 1>

Case 1 is a case where there is no blockage by a human body in the communication between terminal 20 and base station A, and there is no decrease in the UL transmit power due to P-MPR. Thus, in Case 1, it is assumed that the communication quality between base station A and terminal 20 is excellent. In Case 1, the DL power and UL power of base station A, for example, may be values higher than in Cases 2 and 3 to be described later (e.g., expressed as "EXCELLENT" in FIG.7).

Further, in Case 1, since there is no blockage by the human body in the communication between terminal 20 and base station A, and there is no decrease in the UL power due to P-MPR, the UL power and DL power of base station A may be of the same quality level (e.g., "EXCELLENT" in FIG.7).

Further, the communication quality between base station B and terminal 20 is lower than the communication quality between base station A and terminal 20 due to the positional relationship with terminal 20. For example, the DL power and the UL power of base station B may be values lower than the DL power and the UL power of base station A (e.g., expressed as "FAIR" in FIG. 7).

Thus, in Case 1, base station 10 (base station A or base station B) may select a base station to which terminal 20 is connected (e.g., a connection target in UL) based on, for example, the DL powers of base station A and base station B with respect to terminal 20. For example, in the example illustrated in FIG. 7, when base station 10 selects the connection target base station for terminal 20 based on the DL powers, base station A having the higher DL power is selected.

Note that, in Case 1, the UL communication quality with respect to terminal 20 is better in base station A than in base station B as illustrated in FIG. 7. In other words, the ideal connection target base station for terminal 20 in Case 1 is base station A.

As described above, in Case 1, base station 10 is capable of selecting a base station with excellent UL communication quality as the connection target base station for terminal 20 based on the DL powers.

### <Case 2>

Case 2 is a case where there is blockage by a human body in the communication between terminal 20 and base station A, and there is no decrease in the UL transmit power due to P-MPR. Accordingly, in Case 2, the communication quality between base station A and terminal 20 may be lowered as compared with Case 1 due to the effects of the blockage by the human body. For example, the DL power and the UL power of base station A are lower in Case 2 than in Case 1 (e.g., expressed as "FAIR" in FIG. 7).

Further, in Case 2, since the blockage by the human body affects both the DL and UL communications between terminal 20 and base station A, the UL power and DL power of base station A may be of the same quality level as each other (e.g., "FAIR" in FIG.7).

In addition, for example, the DL power and UL power of base station B may be lower values (e.g., referred to as "FAIR" in FIG. 7) than the DL power and UL power of base station A of Case 1 (e.g., "EXCELLENT" in FIG. 7) due to the positional relationship with terminal 20.

Thus, in Case 2, base station 10 (base station A or base station B) may select a base station to which terminal 20 is connected (e.g., a connection target in UL) based on, for example, the DL powers of base station A and base station B with respect to terminal 20.

Note that, in FIG. 7, the DL powers and UL powers of both base station A and base station B are represented by "FAIR" in Case 2 as compared to the DL power and UL power of base station A of Case 1. However, in Case 2, the decrease in the communication quality with respect to base station A is caused by the blockage by the human body, and the decrease in the communication quality with respect to base station B is caused by the distance from terminal 20 (in other words, the distance attenuation). Thus, the relationship (e.g., magnitude relationship) between the communication quality of base station A and the communication quality of base station B in Case 2 may differ depending on the magnitude of the effects of blockage by the human body and distance attenuation. The same applies to the DL power in Case 3 described later.

Thus, in the example illustrated in FIG. 7, when base station 10 selects the connection target base station for terminal 20 based on the DL powers, base station A or base station B having the higher DL power is selected.

As described above, in Case 2, base station 10 is capable of selecting a base station having higher UL communication quality as the connection target base station for terminal 20 based on the DL powers.

Note that, Case 2 is the case where there is no decrease in the transmit power due to P-MPR, but the present disclosure is not limited to this case. For example, Case 2 may be a case where a decrease in the transmit power due to P-MPR is smaller (in other words, the value of P-MPR is smaller) than in Case 3, and the UL and DL communications may be treated as having the same quality level as each other.

### <Case 3>

Case 3 is a case where there is blockage by a human body in the communication between terminal 20 and base station A, and there is a decrease in the UL transmit power due to P-MPR. Accordingly, the communication quality between base station A and terminal 20 may be lowered in Case 3 as compared with Case 1 due to the effects of the blockage by the human body. Further, in Case 3, the UL power is lowered by P-MPR. For example, in Case 3, the DL power of base station A is lower (e.g., expressed as "FAIR" in FIG. 7) than in Case 1 and the UL power of base station A is lower (e.g., expressed as "POOR" in FIG. 7) than the DL power (e.g., "FAIR" in FIG. 7).

In other words, in Case 3, the UL power of base station A (e.g., "POOR" in FIG. 7) is worse in quality than the DL power (e.g., "FAIR" in FIG. 7).

In addition, the DL power and UL power of base station B may be values lower (e.g., expressed as "FAIR" in FIG. 7) than the DL power and UL power of base station A in Case 1 (e.g., "EXCELLENT" in FIG. 7) due to the positional relationship with terminal 20.

Thus, in Case 3, base station 10 (base station A or base station B) may select a base station to which terminal 20 is connected (e.g., a connection target in UL) based on, for example, the DL powers and the UL powers of base station A and base station B with respect to terminal 20.

In Case 3, it is highly probable that the UL communication quality of base station B is better than that of base station A as illustrated in FIG. 7. In other words, the ideal connection target base station for terminal 20 in Case 3 is base station B.

If base station 10 selects the connection target base station for terminal 20 based on the DL power in Case 3 as in Case 2, base station A or base station B having a higher DL power is selected as in Case 2 based on the DL power different depending on the magnitude of the effects of blockage by the human body and distance attenuation. Therefore, in Case 3, there is a possibility that the ideal connection target base station (here, base station B) is not selected if the method of selecting the connection target base station based on the DL power is adopted.

On the other hand, when base station 10 selects the connection target base station based on the DL power and UL power, the difference in UL power between base station A and base station B increases the possibility that base station B with a higher UL power is selected. As described above, in Case 3, base station 10 is capable of selecting a base station having higher UL communication quality as the connection target base station for terminal 20 based on the DL power and the UL power.

Cases 1, 2, and 3 have been described above.

As is understood, in control method 1, terminal 20 determines the UL transmit power based on the association between the UL duty cycles and P-MPR.

In FR2, the configuration width (in other words, the difference between the upper limit value and the lower limit value) of the maximum transmit power specified for each Power Class is larger than that in FR1 (see, for example, FIG. 1). In control method 1, terminal 20 is capable of determining the UL transmit power considering, for example, both the UL duty cycle and P-MPR. For example, the greater the UL duty cycle, the greater the P-MPR is configured (see, e.g., FIG. 5).

This configuration makes it possible for terminal 20 to, for example, determine the UL duty cycle and P-MPR depending on the transmit power configured for terminal 20 among the maximum transmit powers specified for the respective Power Classes. Thus, according to control method 1, in any case where a transmit power within the range specified for the Power Class is configured, terminal 20 is capable of lowering the UL transmit power neither excessively nor insufficiently and transmitting the UL signal. According to control method 1, for example, terminal 20 is capable of appropriately configuring the UL transmit power to satisfy the radio wave protection guideline.

In control method 1, based on the UL duty cycle indicated from terminal 20, base station 10 identifies P-MPR (e.g., upper limit value) used by terminal 20. Identification of P-MPR by base station 10 makes it possible for base station 10 to determine, for example, whether the decrease in the reception quality (e.g., received power) of the UL signal is caused by the configuration of P-MPR by terminal 20 or caused by other factors (e.g., blockage by a human body). Thus, base station 10 is capable of scheduling, for example, the UL resources (e.g., connection target base station) for terminal 20 depending on the P-MPR configuration (e.g., the presence or absence of a decrease in transmit power).

### [Control Method 2]

In the radio communication using FR1, the information on the transmit power indicated to the terminal by the base station includes, for example, information indicating the maximum value of the transmit power (or output power) of the terminal (such information may be referred to as Pmax, for example).

For example, in the radio communication using FR1, Pmax is specified by the base station in a case where the transmit power of a terminal is to be reduced in a place where precision equipment which may be affected by a radio wave is used (e.g., a hospital) or for adjustment of interference with another system. The terminal controls the UL transmit power based on Pmax, for example, within a range where the transmit power is equal to or less than Pmax.

Control method 2 will be described in relation to a case where Pmax is used in the radio communication using FR2.

In control method 2, based on the association between the maximum transmit power value (e.g., Pmax) of the UL signal and the transmission ratio (e.g., UL duty cycle) of the UL signal, base station 10 determines the UL duty cycle corresponding to Pmax configured for terminal 20. Base station 10 also determines the allocation of UL resources to terminal 20 based on the determined UL duty cycle.

Terminal 20 receives, from base station 10, information indicating the allocation of a UL signal determined, for example, based on the association between Pmax and the UL duty cycles and Pmax configured for terminal 20, and determines the UL transmit power based on the received information.

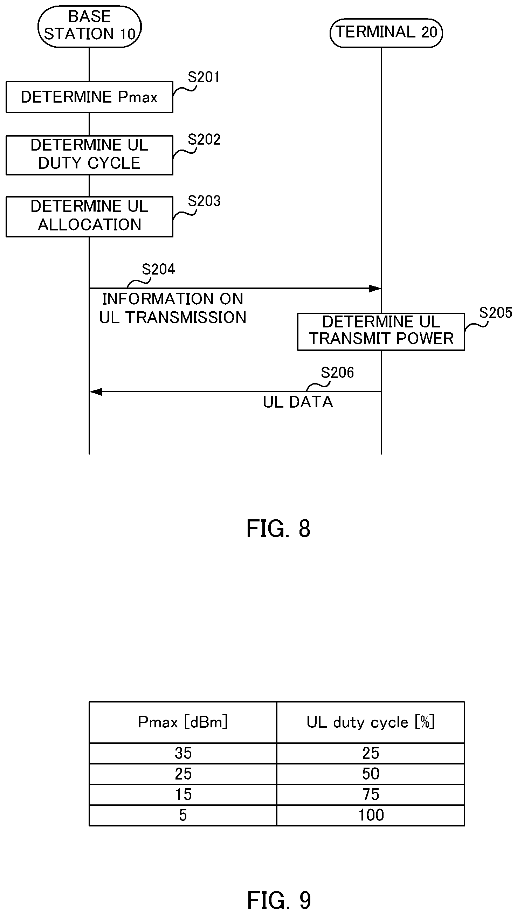

FIG. 8 is a sequence diagram illustrating an example of operations of base station 10 and terminal 20 based on control method 2 according to the present embodiment.

Base station 10 determines Pmax for terminal 20 (S201).

Based on the association between Pmax and UL duty cycles, base station 10 determines a UL duty cycle associated with the determined Pmax (S202).

FIG. 9 illustrates an exemplary association between Pmax and UL duty cycles. In FIG. 9, the UL duty cycles (e.g., 25%, 50%, 75%, and 100%) are associated one-to-one with Pmax (e.g., 35 dBm, 25 dBm, 15 dBm, and 5 dBm).

Note that the association between Pmax and the UL duty cycles is not limited to the example illustrated in FIG. 9. For example, the values of Pmax and the UL duty cycle are not limited to the values illustrated in FIG. 9. In addition, the number of candidates for Pmax and the UL duty cycles is not limited to the example illustrated in FIG. 9 (e.g., four candidates).

Here, the greater the Pmax, the higher the UL transmit power may be configured for terminal 20. For this reason, the greater the Pmax and the higher the UL transmit power, the higher the possibility that the amount of decrease in the transmit power of the UL signal for satisfying the radio wave protection guideline increases. On the other hand, the smaller the UL duty cycle, the lower the transmission ratio of the UL signal in a predetermined period and the lower the transmit power of the UL signal. Therefore, in the association between Pmax and the UL duty cycles illustrated in FIG. 9, the greater the Pmax, the smaller the value of UL duty cycle.

For example, in FIG. 9, base station 10 determines a UL duty cycle in the range of 25% or less when Pmax = 35 dBm. In addition, in FIG. 9, for example, base station 10 determines a UL duty cycle in the range of 75% or less when Pmax = 15 dBm.

In FIG. 8, base station 10 determines (in other words, schedules) the UL allocation for terminal 20 (S203). For example, base station 10 may determine the UL allocation based on the determined UL duty cycle (in other words, the ratio between UL and DL).

Base station 10 notifies terminal 20 of information on the UL transmission (S204). The information on the UL transmission may include, for example, Pmax that is an example of information on the UL transmit power, and a UL grant that is an example of information on the UL allocation. Note that Pmax and the UL grant may be notified simultaneously or individually. For example, Pmax may be notified using a signal of higher layer signaling (e.g., also referred to as Radio Resource Control (RRC) signaling, higher layer signaling, or higher layer parameter), downlink control information (e.g., downlink control information (DCI)), or downlink control channel (e.g., Physical Downlink Control Channel (PDCCH)).

In addition, the timing of notification of Pmax is not limited to that illustrated in FIG. 8. For example, the timing of notification of Pmax may be configured to any timing between S201 and S205 illustrated in FIG. 8.

Terminal 20 determines the UL transmit power of the UL signal (e.g., UL data) using, for example, Pmax indicated from base station 10 (S205).

For example, terminal 20 transmits the UL data to base station 10 in accordance with the UL grant indicated from base station 10 and the determined transmit power (S206). Base station 10 receives the UL signal (e.g., UL data) transmitted from terminal 20.

According to control method 2, based on the association between Pmax configured for terminal 20 and the UL duty cycles, base station 10 is capable of configuring the UL transmit power of terminal 20 by determining the transmission ratio of the UL signal in a predetermined period (in other words, the allocation of the UL signal). For example, in control method 2, the greater the Pmax, the smaller the value of UL duty cycle.

For example, in the allocation of the UL signal, the greater the Pmax, the lower the transmission ratio of the UL signal in a predetermined period, and the UL transmit power of terminal 20 decreases accordingly. Thus, with the value of UL duty cycle decreasing with increasing Pmax, it is possible to lower the UL transmit power at terminal 20, and accordingly, it becomes easier to satisfy the radio wave protection guideline.

Further, for example, in the allocation of the UL signal, the smaller the Pmax, the higher the transmission ratio of the UL signal in a predetermined period, and the decrease in the UL transmit power of terminal 20 is suppressed accordingly. Thus, with the value of UL duty cycle increasing with decreasing Pmax, it is possible to prevent an excessive decrease in the UL transmit power at terminal 20. In other words, terminal 20 is capable of satisfying the radio wave protection guideline without excessively lowering the UL transmit power.

As is understood, in control method 2, base station 10 is capable of determining the UL transmit power by considering both Pmax and the UL duty cycle depending on the transmit power configured for terminal 20 among the maximum transmit powers specified respectively for Power Classes. Thus, according to control method 2, in any case where a transmit power within the range specified for the Power Class is configured, terminal 20 is capable of lowering the UL transmit power neither excessively nor insufficiently and transmitting the UL signal while satisfying the radio wave protection guideline.

Further, for example, in an area (or cell) where an improvement in a UL throughput is expected, base station 10 configures terminal 20 with a smaller Pmax. By configuring a smaller Pmax, a greater value of UL duty cycle is configured (see, e.g., FIG. 9). With this configuration, for example, the UL signal is distributedly allocated to more time resources, and terminal 20 is thus capable of increasing the transmission ratio of the UL to improve the UL throughput.

Further, for example, in an area (or cell) where extension of coverage is expected, base station 10 configures terminal 20 with a greater Pmax. By configuring a greater Pmax, a smaller value of UL duty cycle is configured (see, e.g., FIG. 9). With this configuration, for example, the UL signal is concentratedly allocated to fewer time resources, but can be transmitted using a greater UL transmit power at that time resources, so that the UL coverage can be extended.

As described above, according to control method 2, base station 10 is capable of flexibly controlling the throughput and cell coverage in a cell, for example, depending on the Pmax configuration.

Note that, in control method 2, the association between Pmax and the UL duty cycles (e.g., see FIG. 9) may be shared between base station 10 and terminal 20. In this instance, based on Pmax indicated from base station 10, terminal 20 is capable of identifying the UL duty cycle (e.g., upper limit value) configured by base station 10. This identification allows terminal 20 to reduce the number of candidates for the UL duty cycle that should be considered for satisfying the radio wave protection guideline (in other words, to reduce the number of patterns of the transmission ratio of the UL signal). For example, when the radio wave protection guideline is not satisfied with the UL duty cycle identified based on the association between Pmax and the UL duty cycles, terminal 20 reconfigures any of the UL duty cycle values which is lower than the UL duty cycle. At this time, terminal 20 may exclude, from targets for reconfiguration, a UL duty cycle higher than the UL duty cycle identified based on the association between Pmax and the UL duty cycles.

### [Control Method 3]

Control method 3 is a combined method of control method 1 and control method 2 described above.

For example, base station 10 determines, based on the association between Pmax and the UL duty cycles, the UL duty cycle corresponding to Pmax configured for terminal 20, and notifies terminal 20 of the information indicating Pmax and the UL grant as in control method 2.

Terminal 20 controls the transmit power based on, for example, the information (e.g., UL grant and Pmax) configured by base station 10. At this time, for example, it is probable that the UL duty cycle (in other words, the transmission ratio of the UL signal) that can satisfy the radio wave protection guideline is lower than the transmission ratio of the UL signal in the UL grant configured by base station 10. In this case, terminal 20 may determine the UL transmit power using, for example, P-MPR associated with the UL duty cycle that can satisfy the radio wave protection guideline as in control method 1. Then, terminal 20 transmits the UL signal to base station 10 using the determined UL transmit power.

In addition, terminal 20 may notify base station 10 of the information indicating the configured UL duty cycle in the same manner as control method 1. Base station 10 may schedule terminal 20 based on P-MPR associated with the UL duty cycle in the same manner as the control scheme 1.

As is understood, terminal 20 is capable of appropriately configuring the UL transmit power based on, for example, Pmax, UL duty cycle, and P-MPR for terminal 20 by control method 3. Thus, according to control method 3, terminal 20 is capable of appropriately configuring the UL transmit power to satisfy the radio wave protection guideline.

Control methods 1 to 3 have been described above.

As described above, in the present embodiment, terminal 20 determines the UL transmit power based on the association (e.g., see FIG. 5 or 9) between the transmission ratio of the UL signal in a predetermined period (e.g., UL duty cycle) and the transmit power parameter (for example, P-MPR or Pmax). Then, terminal 200 transmits the UL signal using the determined UL transmit power.

With this transmit power control, terminal 20 is capable of achieving appropriate transmit power control within a range where the radio wave protection guideline is satisfied, for example, based on a combination of both the UL duty cycle and the transmit power parameter.

Note that, the case where the greater the value of UL duty cycle is, the greater the P-MPR is in the association between the UL duty cycles and P-MPR illustrated in FIG. 5 has been described, but the present invention is not limited to this case. For example, the greater the value of UL duty cycle, the smaller the P-MPR may be. Further, the case where the greater the Pmax is, the smaller the UL duty cycle is in the association between Pmax and the UL duty cycles illustrated in FIG. 9 has been described, but the present invention is not limited to this case. For example, the greater the Pmax is, the greater the value of UL duty cycle may be.

In addition, "Pmax," "P-MPR," and "UL duty cycle" in the above-described embodiment are examples of the information on the transmit power, and the present disclosure is not limited to the examples. The information on the transmit power may be replaced by other terms.

Base station 10 (see FIG. 2) according to the above-described embodiment may communicate with terminal 20 (see FIG. 3) in, for example, the LTE band, FR1, and FR2. Note that, the base station communicating with terminal 20 in the LTE band, the base station communicating with terminal 20 in FR1, and the base station communicating with terminal 20 in FR2 may be different base stations. Alternatively, a base station may support part or all of the LTE-band communication, FR1 communication, and FR2 communication. Further, terminal 20 according to the above-described embodiment may communicate with base station 10 in, for example, LTE, FR1, and FR2.

In addition, the operation of terminal 20 may be an FR2 Standalone (SA) operation. Alternatively, the operation of terminal 20 may be a Non Standalone (NSA) operation. For example, terminal 20 may perform the communication in FR2 in conjunction with at least one of LTE and FR1. For example, terminal 20 may be connected to a base station operating in at least one of the LTE band and FR1 and to a base station operating in FR2, for example, by Dual Connectivity (DC).

In addition, the expression "association" between the parameter relevant to the transmission ratio of the uplink signal and the parameter relevant to the UL transmit power may, for example, be replaced by other expressions such as "correspondence," "relation," "replacement," "interpretation," and "conversion."

### (Hardware Configuration)

Note that, the block diagrams used to describe the above embodiment illustrate blocks on a function-by-function basis. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or wirelessly), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmitting unit," "transmission section," or "transmitter." The methods for implementing the functions are not limited specifically as described above.

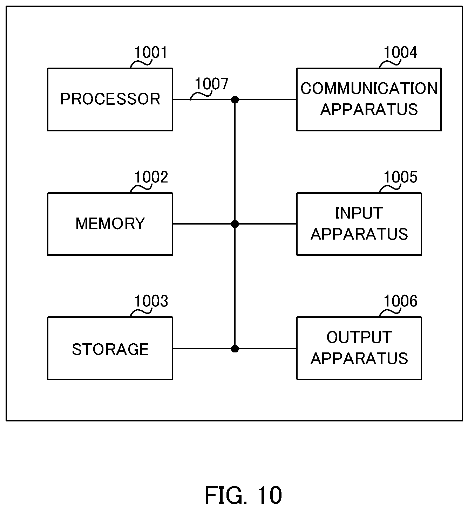

For example, the base station, terminal, and the like according to an embodiment of the present disclosure may function as a computer that executes processing of a radio communication method of the present disclosure. FIG. 10 illustrates an exemplary hardware configuration of the base station and the terminal according to one embodiment of the present disclosure. Physically, base station 10 and terminal 20 as described above may be a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of base station 10 and of terminal 20 may include one apparatus or a plurality of apparatuses illustrated in the drawings or may not include part of the apparatuses.

The functions of base station 10 and terminal 20 are implemented by predetermined software (program) loaded into hardware, such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 103, control section 203, and the like described above may be implemented using processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiments is used. For example, control section 103 of base station 10 control section 203 of terminal 20 may be implemented using a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented using one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including at least one of memory 1002 and storage 1003.

Communication apparatus 1004 is hardware (transmission and reception device) for communication between computers through at least one of wired and wireless networks and is also called as, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, transmission section 101, reception section 102, reception section 201, transmission section 202, and the like described above may be implemented using communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which makes outputs to the outside. Note that input apparatus 1005 and output apparatus 1006 may be integrated (for example, a touch panel).

The apparatuses, such as processor 1001, memory 1002, and the like are connected by bus 1007 for communication of information. Bus 1007 may be configured using a single bus or using buses different between each pair of the apparatuses.

Furthermore, base station 10 and terminal 20 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented using at least one of these pieces of hardware.

### (Notification of Information and Signaling)

The notification of information is not limited to the aspects or embodiments described in the present disclosure, and the information may be notified by another method. For example, the notification of information may be carried out by one or a combination of physical layer signaling (for example, Downlink Control Information (DCI) and Uplink Control Information (UCI)), upper layer signaling (for example, Radio Resource Control (RRC) signaling, Medium Access Control (MAC) signaling, notification information (Master Information Block (MIB), and System Information Block (SIB))), and other signals. The RRC signaling may be called an RRC message and may be, for example, an RRC connection setup message, an RRC connection reconfiguration message, or the like.

### (Applied System)

The aspects and embodiments described in the present disclosure may be applied to at least one of a system using Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

### (Processing Procedure and the like)

The orders of the processing procedures, the sequences, the flow charts, and the like of the aspects and embodiments described in the present disclosure may be changed as long as there is no contradiction. For example, elements of various steps are presented in exemplary orders in the methods described in the present disclosure, and the methods are not limited to the presented specific orders.

### (Operation of Base Station)

Specific operations which are described in the present disclosure as being performed by the base station may sometimes be performed by an upper node depending on the situation. Various operations performed for communication with a terminal in a network constituted by one network node or a plurality of network nodes including a base station can be obviously performed by at least one of the base station and a network node other than the base station (examples include, but not limited to, Mobility Management Entity (MME) or Serving Gateway (S-GW)). Although there is one network node in addition to the base station in the case illustrated above, a plurality of other network nodes may be combined (for example, MME and S-GW).

### (Direction of Input and Output)

The information or the like (see the item of "Information and Signals") can be output from a higher layer (or a lower layer) to a lower layer (or a higher layer). The information, the signals, and the like may be input and output through a plurality of network nodes.

### (Handling of Input and Output Information and the like)

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

### (Determination Method)

The determination may be made based on a value expressed by one bit (0 or 1), based on a Boolean value (true or false), or based on comparison with a numerical value (for example, comparison with a predetermined value).

### (Software)

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a wireless technique (e.g., an infrared ray and a microwave), the at least one of the wired technique and the wireless technique is included in the definition of the transmission medium.

### (Information and Signals)

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

### ("System" and "Network")

The terms "system" and "network" used in the present disclosure can be interchangeably used.

### (Names of Parameters and Channels)

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (for example, PUCCH and PDCCH) and information elements, can be identified by any suitable names, and various names assigned to these various channels and information elements are not limitative in any respect.

### (Base Station (Radio Base Station))

The terms "Base Station (BS)," "radio base station," "fixed station," "NodeB," "eNodeB (eNB)," "gNodeB (gNB)," "access point," "transmission point," "reception point, "transmission/reception point," "cell," "sector," "cell group," "carrier," "component carrier," and the like may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes part or all of the coverage area of at least one of the base station and the base station subsystem that perform the communication service in the coverage.

### (Terminal)

The terms "Mobile Station (MS)," "user terminal," "User Equipment (UE)," and "terminal" may be used interchangeably in the present disclosure.

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

### (Base Station/Mobile Station)

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that, at least one of the base station and the mobile station also includes an apparatus that does not necessarily move during communication operation. For example, at least one of the base station and the mobile station may be Internet-of-Things (IoT) equipment such as a sensor.

The base station in the present disclosure may also be replaced with the user terminal. For example, the aspects and the embodiments of the present disclosure may find application in a configuration that results from replacing communication between the base station and the user terminal with communication between multiple user terminals (such communication may, e.g., be referred to as device-to-device (D2D), vehicle-to-everything (V2X), or the like). In this case, terminal 20 may be configured to have the functions that base station 10 described above has. The wordings "uplink" and "downlink" may be replaced with a corresponding wording for inter-equipment communication (for example, "side"). For example, an uplink channel, a downlink channel, and the like may be replaced with a side channel.

Similarly, the terminal in the present disclosure may be replaced with the base station. In this case, base station 10 is configured to have the functions that terminal 20 described above has.

### (Meaning and Interpretation of Terms)

As used herein, the term "determining" may encompass a wide variety of actions. For example, "determining" may be regarded as judging, calculating, computing, processing, deriving, investigating, looking up, searching (or, search or inquiry)(e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming," "expecting," "considering," and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like hat are non-limiting and non-inclusive examples.

The reference signal can also be abbreviated as an RS and may also be called as a pilot depending on the applied standard.

The description "based on" used in the present disclosure does not mean "based only on," unless otherwise specified. In other words, the description "based on" means both of "based only on" and "based at least on."

Any reference to elements by using the terms "first," "second," and the like does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

The "section" in the configuration of each apparatus may be replaced with "means," "circuit," "device," or the like.

In a case where terms "include," "including," and their modifications are used in the present disclosure, these terms are intended to be inclusive like the term "comprising." Further, the term "or" used in the present disclosure is not intended to be an exclusive or.

The radio frame may be constituted by one frame or a plurality of frames in the time domain. The one frame or each of the plurality of frames may be called a subframe in the time domain. The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot, or the like instead of a subframe.

Here, the TTI, for example, refers to a minimum time unit for scheduling in radio communication. For example, in an LTE system, the base station performs scheduling for allocating a radio resource (a frequency bandwidth, a transmit power, and the like that are used in each user terminal) on a TTI-by-TTI basis to each user terminal. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini slot, one subframe, or one TTI. One TTI and one subframe may be constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. Here, the common RBs may be identified by RB indices that use a common reference point of the carrier as a reference. The PRB may be defined by a certain BWP and may be numbered within the BWP.

The BWP may include a UL BWP and a DL BWP. An UE may be configured with one or more BWPs within one carrier.

At least one of the configured BWPs may be active, and the LTE does not have to assume transmission/reception of a predetermined signal or channel outside the active BWP. Note that, "cell," "carrier," and the like in the present disclosure may be replaced with "BWP."

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

The "maximum transmit power" described in the present disclosure may mean a maximum value of the transmit power, the nominal UE maximum transmit power, or the rated UE maximum transmit power.

In a case where articles, such as "a," "an," and "the" in English, for example, are added in the present disclosure by translation, nouns following these articles may have the same meaning as used in the plural.

In the present disclosure, the expression "A and B are different" may mean that "A and B are different from each other." Note that, the expression may also mean that "A and B are different from C." The expressions "separated" and "coupled" may also be interpreted in the same manner as the expression "A and B are different."

### (Variations and the like of Aspects)

The aspects and embodiments described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present disclosure. Modifications and variations of the aspects of the present disclosure can be made without departing from the spirit and the scope of the present disclosure defined by the description of the appended claims. Therefore, the description of the present disclosure is intended for exemplary description and does not limit the present disclosure in any sense.

### Industrial Applicability

One aspect of the present disclosure is useful in mobile communication systems.

### Reference Signs List

- 10: Base station
- 20: Terminal
- 101, 202: Transmission section
- 102, 201: Reception section
- 103, 203: Control section

## Claims

1. A terminal comprising:
a control section that determines transmit power of an uplink signal based on association between a first parameter indicating a transmission ratio of the uplink signal in a predetermined period and a second parameter relevant to uplink transmit power; and
a transmission section that transmits the uplink signal using the transmit power.

2. The terminal according to claim 1, wherein
the second parameter indicates a back-off value for lowering the transmit power, and,
in the association, the higher the transmission ratio, the greater the back-off value.

3. The terminal according to claim 1, wherein
the second parameter indicates a maximum transmit power value of the uplink signal, and,
in the association, the greater the maximum transmit power value, the lower the transmission ratio.

4. The terminal according to claim 1, further comprising:
a reception section that receives information indicating allocation of the uplink signal based on the association and the second parameter configured for the terminal, wherein
the control section determines the transmit power based on the information.

5. A radio communication method, comprising:
determining transmit power of an uplink signal based on association between a first parameter indicating a transmission ratio of the uplink signal in a predetermined period and a second parameter relevant to uplink transmit power; and
transmitting the uplink signal using the transmit power.
